# NEW EUROPEAN PATENT SPECIFICATION

(11) **EP 2 798 618 B2**
(45) Date of publication and mention of the opposition decision: **31.07.2019**
(45) Mention of the grant of the patent: 10.08.2016
(21) Application number: 12824743.4
(22) Date of filing: 28.12.2012
(51) Int. Cl.: G06Q 20/18, H04N 7/14, H04N 21/258, G07C 9/00, H04N 7/18, G06Q 30/06, G07F 7/10, H04N 21/278, H04N 21/478

(54) **SYSTEM FOR REMOTELY PROVIDING SERVICES THROUGH VIDEO COMMUNICATION**
SYSTEM ZUR FERNBESCHAFFUNG VON DIENSTEN DURCH VIDEOKOMMUNIKATION
SYSTÈME FOURNISSANT DES SERVICES A DISTANCE PAR L'INTERMÉDIAIRE D'UNE COMMUNICATION VIDÉO

(30) Priority: 30.12.2011 IT MI20112434; 19.10.2012 IT MI20121771
(43) Date of publication of application: 05.11.2014
(73) Proprietor: PHONETICA LAB S.R.L., 20037 Paderno Dugnano (MI) (IT)
(72) Inventor: DURANTE, Giuseppe, I-20157 Milano (IT); DURANTE, Marco, I-20020 Arese (IT); TREVISI, Raoul, I-20020 Arconate (IT)
(74) Representative: Brasca, Marco
(86) International application number: PCT/IB2012/057791
(87) International publication number: WO 2013/098790

(56) References cited:
- EP-A1- 1 296 290
- IT-A1- MI20 101 521
- JP-A- 10 246 041
- JP-A- H10 246 041
- US-A1- 2003 132 298
- US-A1- 2005 167 484
- US-A1- 2005 171 787
- US-A1- 2011 248 818

## Description

### Technical field

The present invention relates to a system and a method for the management of services that require direct interaction between a user and an operator and, in particular, a system that is adapted to allow remotizing of such services while leaving intact the aspect of free interaction between user and operator.

### Technical background

There are many different situations in which the user needs, by going for example to offices or shops run by third parties, to have a conversation with a physical person for preliminary operations, such as for example the interaction with a telephone operator in order to be put through to the office of a person who is waiting for the user at a company for a meeting, or the interaction with sales assistants in order to obtain information or make purchases of particular products, such as for example cellular phones, at shopping centers.

A first example of the field of application of the present invention relates, therefore, to the management of reception services of a company or the like.

Many company centers, in particular centers that host commercial offices, regularly receive visitors. Before being able to access the company offices and meet the members of the company, such visitors are normally received by reception staff, whose task it is to answer visitors' questions, verify their appointments, record information about the visitors themselves, provide them with a personal identification card (known as an access badge) which grants access to the company buildings, and provide information on which direction to take in order to find the meeting.

The reception thus constitutes the first point of contact of a company with the outside world and it plays a function that is both organizational and symbolic for the company itself. The reception function is, in fact, nothing less than a business card with which a company presents itself to clients and suppliers, partners and associates.

A second area of application of the present invention relates to the management of sales services in shops or at shopping centers.

At present in shops and at shopping centers, particularly those given over to the sale of electronic devices, such as smartphones, tablet computers, video cameras and the like, customers require assistance while making their purchases, with regard to the choice of device that is best suited to their needs, and in order to get information about the use of the device and the configurations necessary for its correct operation, and also in order to perform trials of the device in order to verify that this actually meets their needs and that, once the product has been purchased, they are capable of using it to its full potential.

For this reason customers are normally received by specialist sales staff, suitably trained, whose task it is to answer their questions and provide information about the products and services they are interested in. The same staff, in the event of a positive outcome of the purchase, takes care of handling the sales transaction directly on site.

Staff who engages in such types of activity therefore plays a significant role, be it in managing the company organization or in sales at the retail outlets and, for this reason, it is important that the staff be competent, efficient and suitably trained.

The costs and problems associated with training and maintaining such staff can however be very high. For example the sales staff must have a high level of technical specialization in the products put on sale.

Moreover at certain times or in certain places, for example at night or on public holidays, it is not possible to provide the physical on-site presence of staff, with negative impact on the cover and continuity of the service.

In particular situations, such as for example a shortage of staff owing to absence or illness, or a higher influx of visitors or customers than the norm, inefficiencies and delays can be caused, in that the staff available is not sufficient to ensure the provision of the service within acceptable times.

Finally, in some cases, the cost of staff dedicated to such duties is not justified or sustainable, for example for companies or retail outlets for which the influx of visitors is infrequent or occasional.

In order to overcome these drawbacks, automated services are known in the background art. Such services are in general characterized by the substitution of physical staff with computer systems provided with a user interface by way of which the visitors can for example navigate the company organization chart and contact the person with whom they have an appointment, by way of a telephone or video call, or perform the selection and purchase of a product autonomously.

Although such automated systems make it possible to realize savings with respect to the use of customer assistance staff, the quality of the service provided is often inadequate with respect to the needs.

In fact in the management of reception services, the absence of human interaction with a coordinating person with knowledge of the company dynamics means that it is not possible to manage situations that are more complex than the simple reporting of the arrival of a visitor to the person with whom he or she has an appointment. For example there may be the need to make the visitor wait owing to temporary unavailability of the employee, or to direct the visitor to another employee in the event of the absence of the person sought. Moreover such automated services do not enable a centralized and secure management of services for the identification, registration and access clearance of visitors.

Similarly, in the management of sales services, the autonomous purchase does not make it possible for the customer to get expert technical assistance on the characteristics of the products, or to perform trials of the product before purchase.

Examples of systems in the background art are for example illustrated in the following patent applications: JP10246041A, EP1296290A1, US2005/171787A1, US2005/167484A1, US2003/132298A1 and US2011/248818A1. However, such systems only provide for the possibility to route a communication to a specific, remote, fixed operator and/or they do not provide for the possibility of free, live interaction, for an immediate handling of the user's requests, which is necessary for the purposes of the present invention.

The aim of the present invention is therefore to devise a system and a method for managing services for visitors or customers which is capable of overcoming the above-mentioned limitations of the known art, by combining the efficiency and quality of a real-time, live system with the optimization of the staff employed.

Within this aim, an object of the invention is to devise a system and a method which are capable of providing visitors or customers with a sales or reception service that is effective, efficient and complete, without the need for a dedicated person for reception or assistance to be physically present on site.

A further object of the invention is to provide a system that is capable of being transparently integrated with preexisting methods of receiving visitors and controlling access.

A further object of the invention is to provide a system that is capable of enabling the delivery of products that were previously purchased without the need for delivery staff to be physically present on site.

Another object of the invention is to provide a system that is highly reliable, easy to implement and low-cost.

### Summary of the invention

This aim and these and other objects which will become more apparent hereinafter are all achieved by a system for remotizing the access control to a user service as defined in claim 1.

### Description of the figures

Further characteristics and advantages of the invention will become more apparent from the description of two preferred, but not exclusive, embodiments of the system and of the method according to the invention, illustrated by way of non-limiting example in the accompanying drawings wherein:
Figure 1 is a schematic diagram of a generic site which uses a system for remotizing reception services according to a first embodiment of the invention;
Figure 2 is a block diagram of a possible architecture of one aspect of the system shown in Figure 1;
Figure 3 is a flowchart that illustrates a possible embodiment of the method of entry of a visitor in the system according to a first embodiment of the invention;
Figure 4 is a schematic diagram of a generic site which adopts a system for the remote assistance of sales services according to a second embodiment of the invention;
Figure 5 is a block diagram of a possible architecture of one aspect of the system shown in Figure 4;
Figure 6 is a flowchart that illustrates a possible embodiment of the method of purchase of a product or service according to a second embodiment of the invention.

### Detailed description

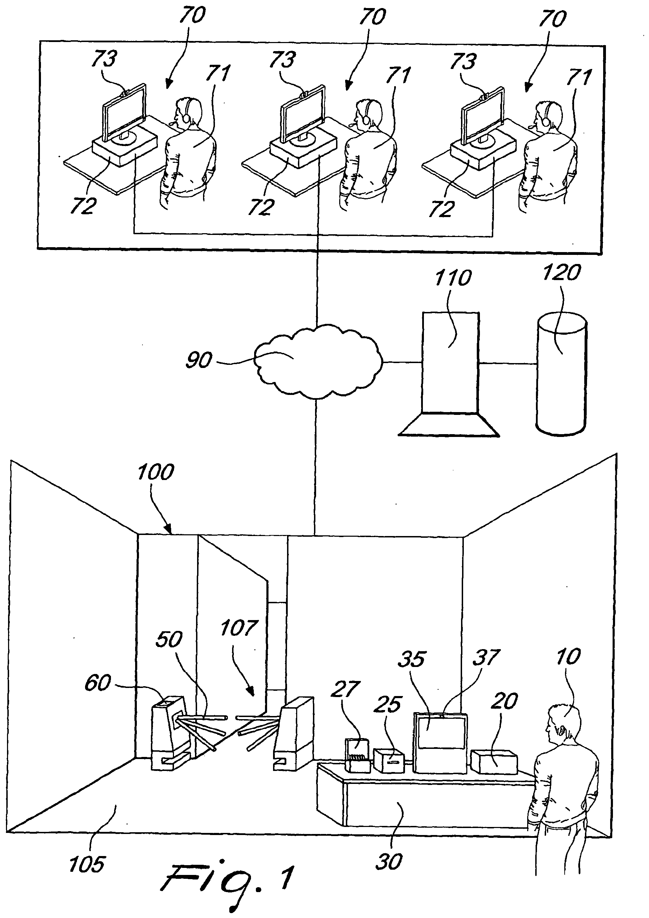

Figure 1 shows the functional scheme of a generic site, for example a company, which uses a system for remotizing reception services according to the invention.

The site, which is indicated with the reference numeral 100, comprises an entry zone 105 and a zone which is subject to access control 107. The entry zone 105 is the first zone that the users 10, who are indicated in this embodiment with the term "visitors", encounter in accessing the site and it comprises a station 30, which is indicated in this embodiment as a registration station, which in turn comprises a terminal 35 and a first video acquisition device 37, for example a still camera or a video camera, which is connected to the terminal 35 by way of a wired or wireless connection.

The registration station 30 further comprises a scanning device 20, an access badge activation device 25 and an access badge pigeonhole 27. The term "access badge" means, in this text, a personal identification card of any conventional type, for example based on RFID technology or on the reading of a magnetic strip or a microchip. Similarly, devices adapted to read or detect access badges here mean devices for reading cards according to the respective technology.

The scanning device 20 is any device that is capable of scanning a document and sending the scan telematically, for example a conventional scanner.

The access badge activation device 25 is a device that is adapted to detect and telematically transmit an identification code stored in a card of the type of an access badge.

The access badge pigeonhole 27 is a station that is adapted to contain a plurality of access badges which are available to be assigned to arriving visitors. The pigeonhole can also be a single container, i.e. not divided into compartments, inside which the various access badge cards are placed.

The zone subject to access control 107 can typically comprise a door 50 which permits access to the zone itself, i.e. a physical barrier that is adapted to prevent access to the zone subject to access control 107 by unauthorized persons. In one embodiment the door 50 is a system of turnstiles.

Proximate to the door 50 there is an access badge reader 60. The access badge reader 60 is a device that is capable of reading and transmitting the identification code stored in the access badge itself, and of enabling the opening of the door 50 if such identification code is found to be associated with a person who is authorized to enter. The access badge reader 60 can adopt for example reading techniques of the optical, magnetic or proximity (contactless) type.

The system according to the invention further comprises one or more video assistance stations 70, which are indicated in this embodiment as reception stations. Each station is managed by an operator 71 and comprises a terminal 72 which is provided with a second video acquisition device 73, for example a still camera or a video camera, which is connected to the terminal 72 by way of a wired or wireless connection.

Each one of the terminals 72 is connected with the terminal 35 of the registration station 30, so as to enable two-way video calls in real time between the visitors 10 who present themselves before the terminal 35 and the operators 71 sitting before the terminals 72.

In one embodiment the terminal 72 is moreover connected to the internal company network (not shown in the figure), so that the operator 71 is capable of communicating with the company employees by way of such network. In an alternative embodiment the operator 71 communicates with the company employees by way of the telephone network.

The reception stations 70 can be physically located within the site 100 or they can be in a remote location. Moreover each reception station 70 can be connected to more than one registration station 35, where it is possible for each registration station 35 to be located in different positions on the same site 100 or on different sites, belonging to the same company or to different companies.

One or more of the reception stations 70 can be offshore stations at a conventional call center or a video call center. The operator 71 can thus also manage other clients of the call center which are not registration stations. Moreover, the system is capable of automatically selecting a free operator 71 from those working at the call center thus enabling the immediate handling of the request of the user.

Each reception station 70 comprises means for distinguishing the specific registration station 35 from which a communication request originates.

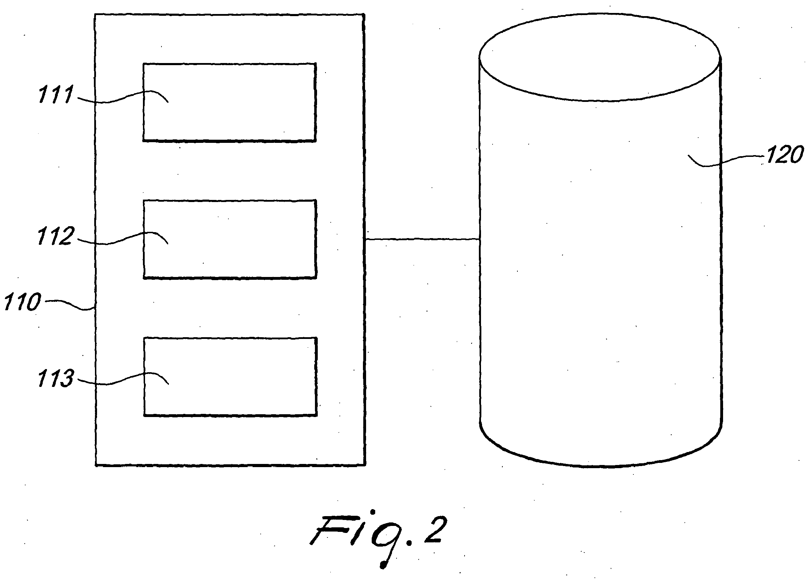

The system according to the invention further comprises a control system 110, typically a system of the server type, which is configured to interface with the terminals 72 of the reception stations 70 in order to receive information about the visitors entered by the reception operators 71 by way of the terminals 72, and to interface with the access badge reader device 60 in order to receive and analyze the identification codes detected by such device, according to methods which will be explained in more detail with reference to Figure 2.

The control system 110 can be physically located within the site 100 or it can be in a remote location.

Figure 2 shows in more detail an embodiment of an architecture of the control system 110 according to the invention in Figure 1, and its interfacing with the devices described in Figure 1.

The control system 110 comprises a module for interfacing with the reception stations 111, a module for handling visitor details 112 and a module for managing accesses 113. The control system 110 moreover comprises or has access to storage means 120, which are adapted to store identification data on visitors and identification codes of the access badges enabled to access the site 100.

The module for interfacing with the reception stations 111 is a typical front-end module which handles the generation and control of the user interface displayed on the terminals 72 of the reception stations 70 for the input of data relating to an arriving visitor 10. In particular such module manages the data input from and the data output to the user interface which is displayed on the terminals 72.

In one embodiment such interface module presents the reception operator 71 with an input field for each item of identification data that the reception operator 71 has to ask of the visitor 10 during the registration step, such as for example name, company, and the person with whom the visitor has an appointment. In a preferred embodiment such identification data further comprise a personal identification element, for example an identification element of an identity document.

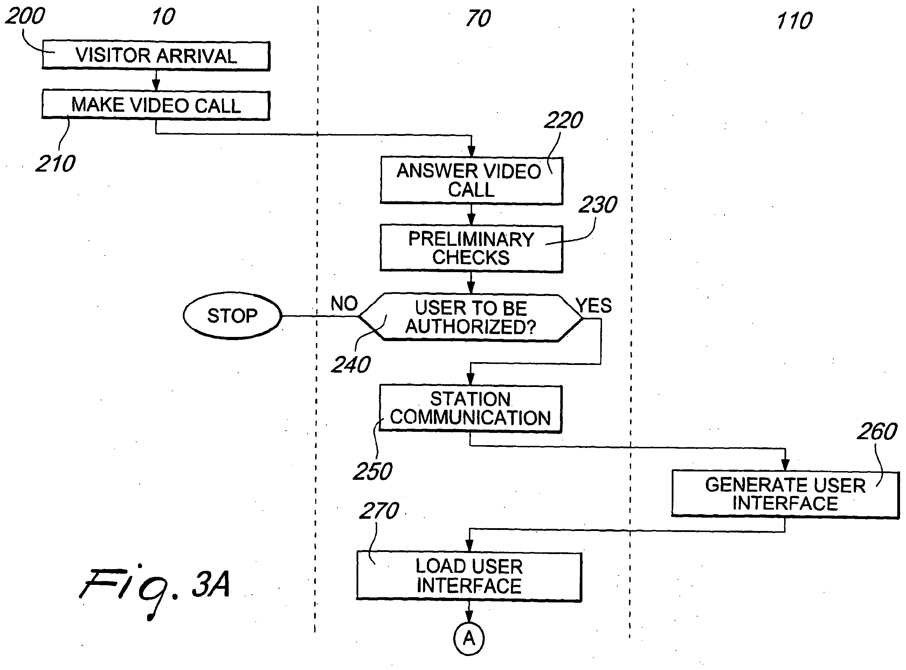

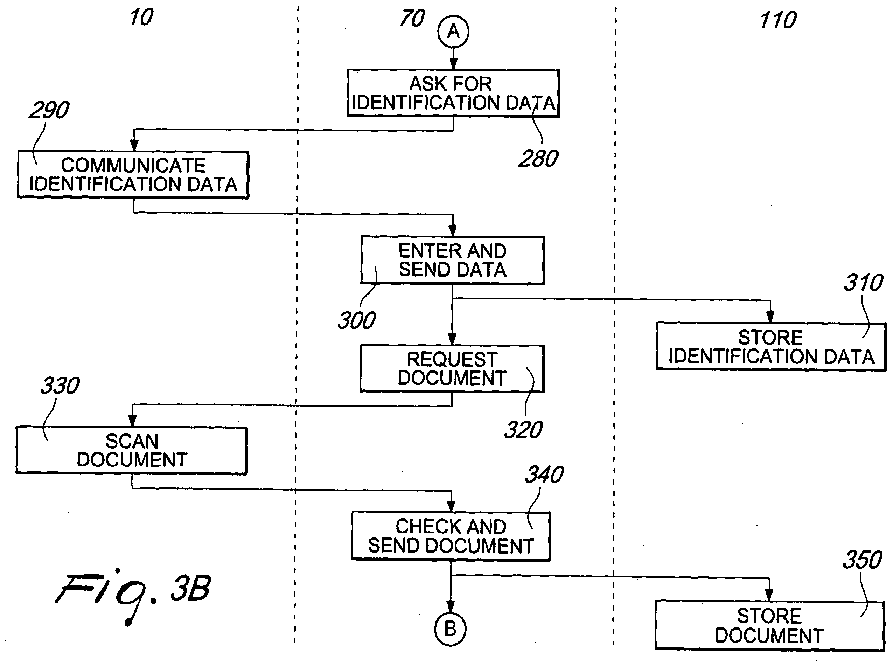

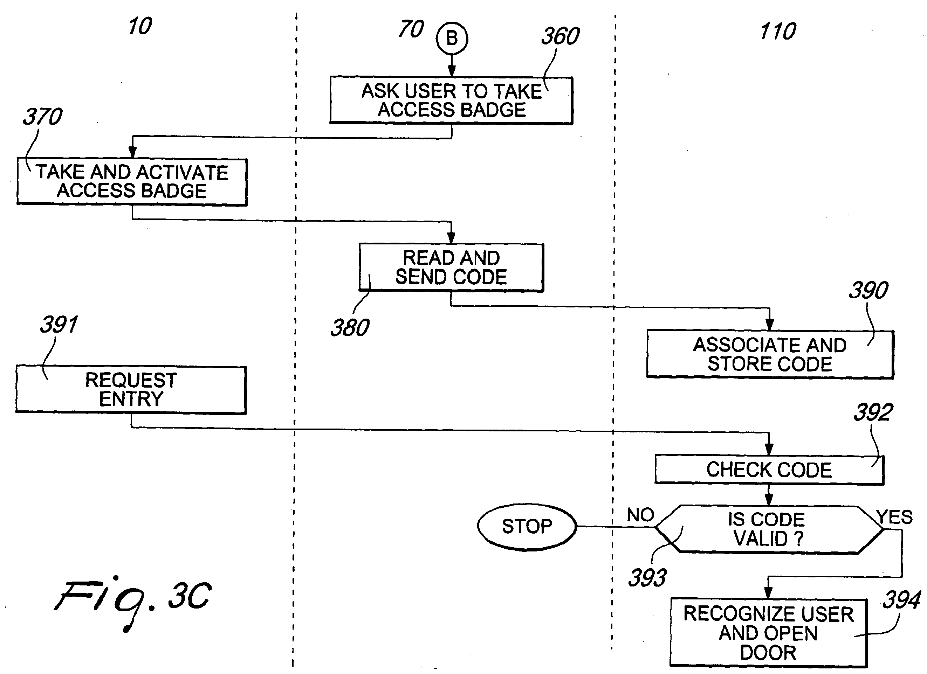

During the procedure of identification and clearance of a visitor, such identification data will be associated with the identification code of an access badge, according to methods which will be explained in more detail with reference to Figure 3.

The visitor details handling module 112 is configured to work together with the module for interfacing with the reception stations 111 in order to retrieve the identification data of the visitors which were input by the operators 72, in order to perform a series of formal checks on that data, and in order to store such data in the storage means 120.

Finally the access management module 113 is a module configured to automatically identify the identity of a person on the basis of an identification code which is stored in an access badge in the possession of that person. Typically this is an application software package that is capable of making a comparison between the identification code read by the access badge reader 60 and a plurality of identification codes stored in an adapted list of codes which are enabled for access which is present in the storage means 120, and of communicating the outcome of such comparison to the access badge reader 60.

A possible embodiment of the method of entry of a visitor in a site according to the invention will now be explained with reference to Figure 3.

The method begins at step 200, with the arrival of a visitor 10 at the site 100. In particular the visitor 10 enters the site 100 by entering the entry zone 105, and he or she takes up position before the registration station 30.

In step 210 the visitor 10 interacts with the terminal 35 of the registration station 30 in order to initiate a video call with one of the plurality of reception operators 71. In one embodiment the visitor 10 begins the video call by pressing a button arranged on a touch screen or on a keypad associated with the terminal. In an alternative embodiment the positioning of the visitor proximate to the registration station 30 is detected by a sensor which automatically triggers the activation of the video call.

The system routes the call to one of the reception operators 71. In particular, the call can be routed to a call center that comprises a plurality of operators 71, from which the system can select a free operator, indicating to him or her the type of incoming call, i.e. that it is a video call for reception operations. The operator 71 answers the video call and receives the visitor at the site.

As previously mentioned, the terminal 72 of the reception station 70 comprises means for notifying the reception operator 71 of identification elements of the specific site 100 and of the specific registration station 30 from which the video call originates. In this manner, the operator 71 is capable of tailoring the welcome message to the visitor 10 to the specific site 100 and to the specific registration station 30 where the visitor 10 has presented himself or herself. The operator 71 is thus capable of receiving the visitor and of responding to all his or her requirements as if the operator were physically present on the site 100.

For example, the system can visually show the operator 71 identification and key information about the site where the visitor is located, for example in the form of a map of the premises, so as to enable the operator to orient himself or herself correctly in the space in which the visitor is located.

In step 230 the reception operator 71 can perform some preliminary checks on the purpose of the visit of the visitor 10, which comprise for example asking the time of the appointment and the details of the person to meet and, then, contacting the required person, by telematic or telephonic means, in order to verify their availability and receive instructions on where to direct the visitor 10 once the registration step is completed and access has been granted.

In step 240 the operator 71 decides whether, on the basis of the preliminary checks performed in step 230, the visitor 10 is to be granted access; if not, for example if the person requested is unavailable or if the meeting was not planned, these reasons are explained to the visitor 10, after which the video call is broken off and the method comes to an end. In this case, the visitor 10 will not be able to pass through the door 50 and access the zone subject to access control 107.

In the affirmative case, i.e. if the person required confirms that the visitor 10 is to be granted entry, then in step 250 the operator 71 sends the control system 110 an identification code of the registration station 35 from which the current access request originates.

In response to such communication, in step 260, the control system 110, in particular the module for interfacing with the reception stations 111, generates a user interface comprising the identification data to be asked of the visitor 10, which can follow the specific company rules of the company at which the registration station 30 is installed. By way of non-limiting example, one company might ask only for the input of the name of the visitor and of the person to meet, whereas another company might require more detailed data, such as professional qualification, company of origin, telephone contact details and so on.

The user interface thus generated is loaded onto the terminal 72 of the reception operator 71 (step 270). In steps 280, 290 and 300 the operator 71 and the visitor 10 interact by way of the video call initiated in step 210 in order to compile the identification data requested by the user interface, data which, in step 310, are sent to the control system 110 and stored in the storage means 120.

In step 320 the reception operator 71 can ask the visitor 10 to show photo identification, for example an identity document, and instruct the user to insert such document into the scanning device 20 of the registration station 30.

In step 330 the visitor 10 follows such instructions. The user's document is in this manner scanned by the scanning device 20 and the scan obtained is sent to the terminal 72 of the operator 71, who, in step 340, after carrying out optional validity checks of the document and of congruency with the identification data entered previously, in turn sends it to the control system 110 for storage in the storage means 120 (step 350) together with the identification data stored in step 310.

In step 360 the reception operator 71 instructs the visitor 10 to take an access badge from the access badge container or pigeonhole 27 and place it in the access badge activation device 25.

In step 370 the visitor 10 carries out the instructions received: in this manner the identification code of the access badge taken by the user is read by the access badge activation device 25 and sent to the terminal 72.

A person skilled in the art will understand easily that it is possible to provide a single device that simultaneously performs the functions of access badge pigeonhole 27 and of access badge activation device 25, that is to say a pigeonhole which is provided with a device for reading the identification code of the access badge for each compartment, which is capable of reading the identification code of an access badge the moment it is extracted from the pigeonhole, or a container which is provided with a device for reading the identification code of the access badge that is extracted, which is capable of reading the identification code of an access badge the moment it is extracted from the container.

In step 380 the operator 71 in turn sends the identification code read by the access badge activation device 25 to the control system 110, which, in step 390, executes the association between the identification code received and the identification data of the visitor 10 stored in steps 310 and 350. Moreover, the identification code of the access badge is marked as a code enabled for entry to the zone subject to access control 107. From this moment the access badge taken by the visitor 10 is activated and is associated with the visitor 10.

In step 391 the visitor 10 moves toward the door 50 and inserts his or her access badge in the access badge reader 60, or brings it in close proximity thereto. This triggers the reading of the identification code contained in it and the sending of the code to the control system 110, in particular to the access management module 113.

In step 392 the access management module 113 accesses the storage means 120 in order to check whether the identification code is enabled for access and sends the device access badge reader 60 a response regarding the recognition of the user: if the user has been correctly recognized (step 393), then in step 394 the access badge reader 60 emits a visual or acoustic clearance signal, for example a green light or a message of the type "Welcome, [user name]". Moreover, the door 50 is opened in order to allow the passage of the user.

The person skilled in the art will understand easily that a method similar to the one described above for the management of the entry of a visitor to a site can be provided in order to manage the exit of the visitor from the same site. The visitor can for example present himself or herself once again before the registration station 30, and, acting on instructions from a reception operator 71, in the form of a video call or recorded video message, positions the access badge used in the visit in the access badge activation device 25 so as to deactivate it, and then place it again in the access badge pigeonhole or container 27, so as to make it available for a new visitor. However, the step of returning the access badge and deactivating it is preferably executed without requiring any interaction with an operator 71. In particular, at the time of exit, when the visitor passes the access badge over the reader in order to open the turnstile, the access badge can be automatically disabled by the control system 110.

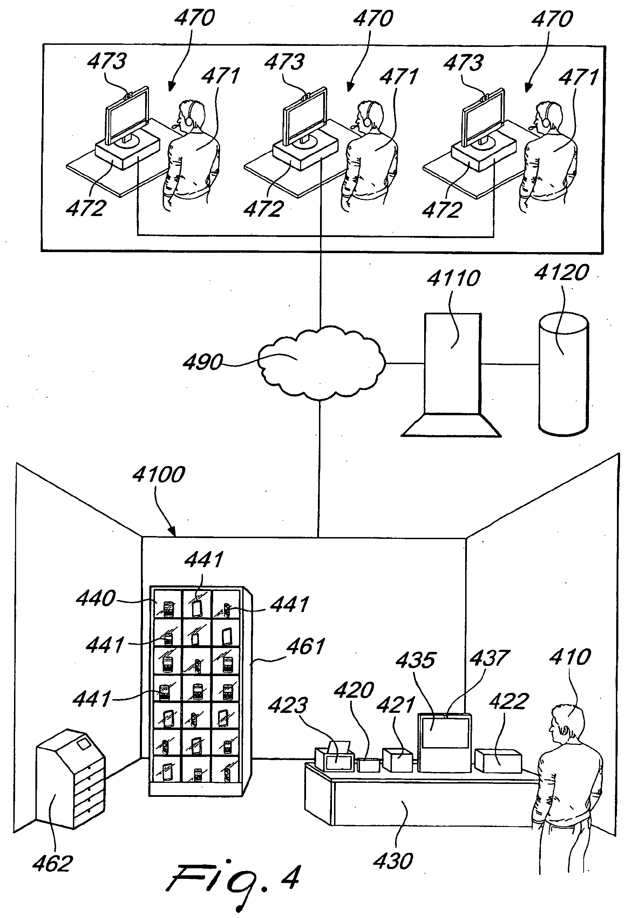

Figure 4 shows the functional scheme of a generic site, for example a retail outlet, which uses a system for remotizing sales services according to the invention.

The site, which is designated with the reference numeral 4100, comprises a station 430, which in this embodiment is designated as an identification station with which the users 10, who in this embodiment are designated as visitors, interact upon their entry to the site. The identification station 430 in turn comprises a terminal 435 and a first video acquisition device 437, for example a still camera or a video camera, which is connected to the terminal 435 by way of a wired or wireless connection. The identification station 430 further comprises a scanning device 420, i.e. any device that is capable of scanning a document and sending the scan telematically, for example a conventional scanner.

The identification station 430 can further comprise a device 421 that is adapted to execute an economic transaction, for example a POS, and a device 422 that is adapted to affix a signature in electronic format, for example a tablet computer, and a printing device 423 that is adapted to print documents for the handover thereof to the customer.

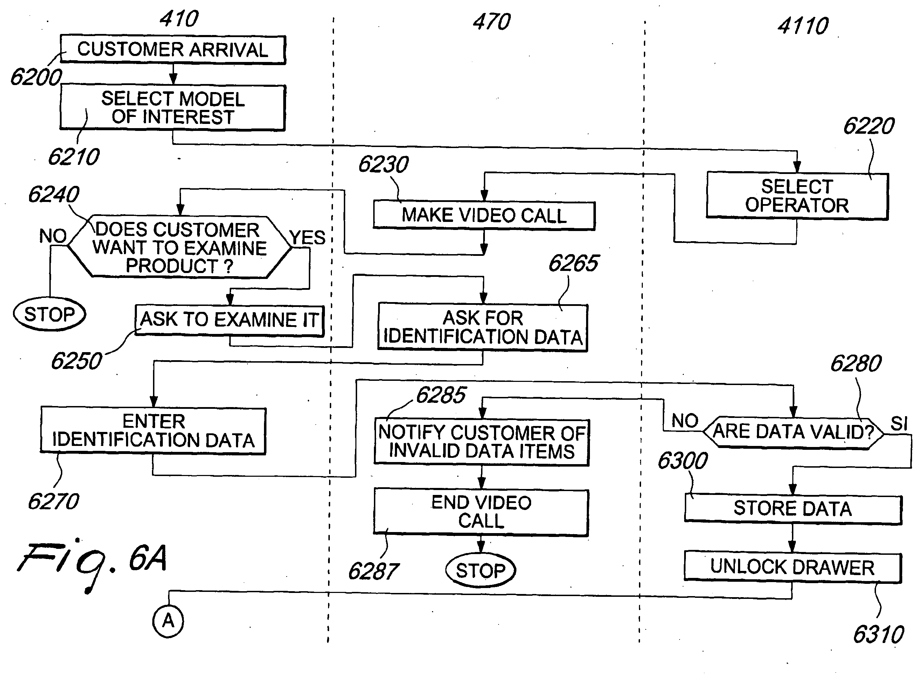

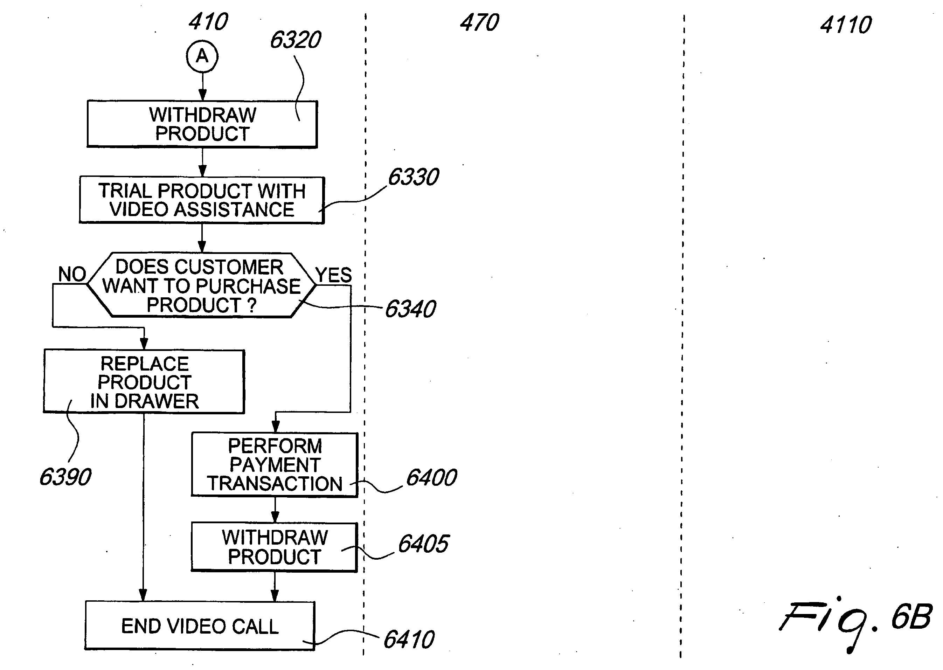

The site can further comprise an electronic showcase or set of drawers 461, comprising a plurality of cells or drawers 440, in each one of which a product 441 is exhibited which can potentially be purchased by the customer. Normally the drawers 440 are locked and the products cannot be withdrawn; a customer can however request the unlocking of a determined drawer according to methods which will be explained in more detail with reference to Figure 6.

The site can further comprise a dispenser 462, which comprises a plurality of products corresponding to each product 441 that is exhibited in the set of drawers 461, which are new and boxed, and which is adapted to allow the customer to withdraw the product he or she has selected at the end of the purchase procedure, according to methods which will be explained in more detail with reference to Figure 6.

The system according to the invention further comprises one or more video assistance stations 470.

Each station is managed by an operator 471 and comprises a terminal 472 which is provided with a second video acquisition device 473, for example a still camera or a video camera, which is connected to the terminal 472 by way of a wired or wireless connection.

Each one of the terminals 472 is connected with the terminal 345 of the identification station 430, so as to enable two-way video calls in real time between the customers who present themselves before the terminal 435 and the operators 471 sitting before the terminals 472.

The video assistance stations 470 can be physically located within the site 4100 or they can be in a remote location. Moreover each video assistance station 470 can be connected to more than one identification station 430, where it is possible for each identification station 430 to be located in different positions on the same site 4100 or on different sites, belonging to the same retail outlet or to different outlets.

The system according to the invention further comprises a control system 4110, typically a system of the server type, which is configured to interface with the identification station 430 in order to receive the selection made by the customer regarding the device that he or she wishes to examine and in order to check the identification data of the customer. The control system 4110 is further configured to interface with the terminals 472 of the video assistance stations 470 in order to select the available operator that is technically most capable of explaining the characteristics of the product selected by the user, according to methods which will be explained in more detail with reference to Figure 6.

The control system 4110 can be physically located within the site 4100 or it can be in a remote location.

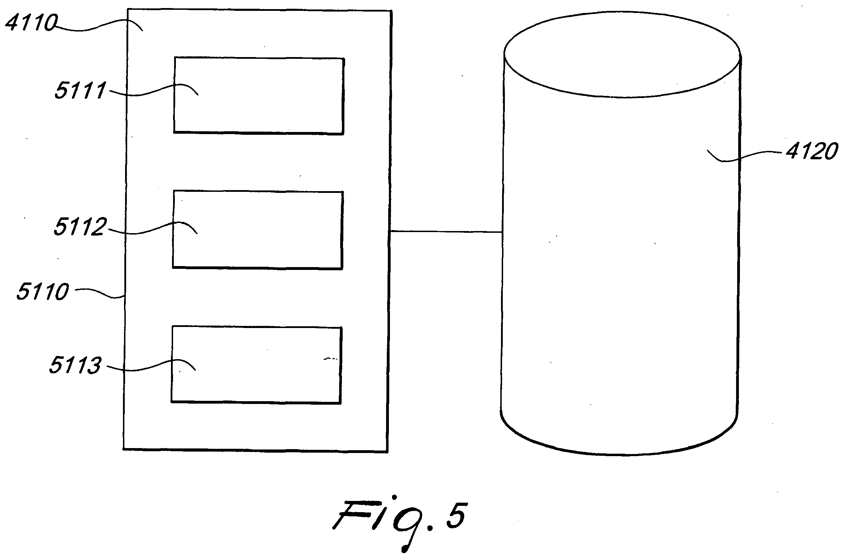

Figure 5 shows in more detail an embodiment of an architecture of the control system 4110 according to the invention in Figure 4, and its interfacing with the devices described in Figure 4.

The control system 4110 comprises a module 5111 for interfacing with the video assistance stations, a module 5112 for handling the customer details and a module 5113 for interfacing with the identification station 430. The control system 4110 further comprises or has access to storage means 4120, which are adapted to store the identification data of customers and of video assistance operators.

The module for interfacing with the video assistance stations 5111 is a typical front-end module which handles the generation and control of the user interface displayed on the terminals 472 of the video assistance stations 470 for the input of data relating to a customer. In particular such module manages the data input from and the data output to the user interface which is displayed on the terminals 472.

In one embodiment, such interface module presents the video assistance operator 471 with an input field for each identification data item that the video assistance operator 471 has to ask of the customer 410 in the identification step, such as for example personal details.

In one embodiment, such identification data also comprise a personal identification element, for example the scanning of an identity document presented by the customer, as will be explained in more detail with reference to Figure 6.

Before a customer is authorized to examine the products on sale, the visitor details handling module 5112 is configured to work together with the module for interfacing with the identification stations 5111 in order to retrieve the identification data of the customers which were input by the operators 472, in order to perform a series of formal checks on that data, and in order to store such data in the storage means 4120. In particular the identity document can be compared with the personal details and with the appearance of the customer, so as to minimize the risk that the customer withdraws the product for examination and leaves the site without performing the payment transaction, according to methods which will be explained in more detail with reference to Figure 6.

Finally the module 5113 for interfacing with the identification stations 30 is a module that is configured to present, at the identification station 30, a user interface, for example a multi-option touch screen, that is adapted to enable the selection of the product in which the customer is interested, and to give instructions to the customer on performing payment transactions, according to methods which will be explained in more detail with reference to Figure 6.

A possible embodiment of the method of entry of a customer in a site according to the invention will now be explained with reference to Figure 6.

The method begins at step 6200, with the arrival of a customer 410 at the site 4100. The customer 410 enters the site 4100 and he or she takes up position before the identification station 430.

In step 6210 the customer 410 interacts with the terminal 435 of the identification station 430 in order to initiate a video call with one of the plurality of reception operators 471. In one embodiment, the customer 410 initiates the video call by pressing a button arranged on a touch screen or on a keypad which are associated with the terminal, such button uniquely identifying the product in which the user is interested among those displayed in the electronic set of drawers 61.

In step 6220 the selection made by the user 410 is detected by the control system 4110, which routes the call to one of the reception operators 471; in particular, by accessing information stored in the storage means 4120, the control system 4110 selects one of the operators who are available at the moment and who are knowledgeable about the product selected.

In step 6230 the selected operator 471 initiates the video call with the customer 410 who is present at the identification station 430 and receives the customer at the site.

The terminal 472 of the video assistance station 470 comprises means for notifying the reception operator 471 of identification elements of the specific site 4100 and of the specific identification station 430 from which the video call originates. In this manner, the operator 471 is capable of tailoring the welcome message to the customer 410 to the specific site 4100 and to the specific identification station 430 where the customer 410 has presented himself or herself. The operator 471 is thus capable of receiving the customer and of responding to all his or her requirements as if the operator were physically present on the site 4100.

In particular in step 6230 the operator 471 is capable of explaining, in an interactive video call, the main characteristics of the model requested by the customer 410 and of answering questions about the product from the customer 410.

In step 6240 the customer decides whether, in addition to the information received, he or she wants to examine the product and touch it; if not, i.e. if the user is satisfied with the information received and does not want to purchase the product, the method is terminated. In the affirmative case, in step 6250 the customer 410 sends the operator 471 a request to examine the product. Before this can happen the customer must be identified by the system.

To this end in step 6265, the control system 4110, in particular the module for interfacing with the video assistance stations 5111, generates a user interface comprising the identification data to be asked of the customer 410, such as personal details, tax code and the like. In a preferred embodiment such data can moreover require the customer 410 to show a form of photo identification, for example an identity document.

The user interface thus generated is loaded onto the terminal 472 of the video assistance operator 471.

In steps 6265 and 6270 the operator 471 and the customer 410 interact by way of the video call initiated in step 6230 in order to compile the identification data requested by the user interface: in particular the operator 471 instructs the customer 410 to insert the identity document in the scanning device 420 of the identification station 430.

In step 6280 the data entered in steps 6265 and 6270 are verified by the control system 4110: if the result of the verification is negative, for example if the identity document is not valid or does not match the other data entered, these reasons are sent via the module 5111 for interfacing with the video assistance stations to the operator 471, who in step 6285 explains these reasons to the customer 410, after which in step 6287 the video call is broken off and the method is terminated. In this case, the customer 410 will not be able to withdraw and examine the product.

If the result of the verification is positive, then the data entered by the user are stored in the storage means 4120 (step 6300).

At the end of this verification step, the control system 4110, in step 6310, unlocks the drawer corresponding to the product that the customer wants to examine.

In step 6320 the customer 410, at the invitation of the video assistance operator 471, can thus withdraw the product he or she is interested in from the unlocked drawer, and, without interrupting the video call that was initiated in step 6230, in step 6330 he or she can perform trials on the product under the guidance and supervision of the video assistance operator 471.

Once the customer 410 has finished performing the trials that he or she wanted to perform, in step 6340 he or she decides whether or not to purchase the product; if the customer 410 does not want to purchase the product, then in step 6390 it will be repositioned in the drawer that was previously unlocked and closing of the drawer will result in locking of the drawer.

If, however, the customer 410 wants to purchase the product, then in step 6400 the product will be repositioned in the corresponding drawer in the same way as in step 6390, and then the customer 410 will be guided in the purchase thereof by the video assistance operator 471 by way of using the payment transaction device 421; once the transaction has been performed the customer will see a product withdrawal code displayed on the terminal 435.

In a preferred embodiment, the system involves the integrated use of a POS terminal as the payment device 421 and of a tablet computer as the device 422 for making a signature in electronic format, which for example makes it possible to receive the data of the economic transaction into the system from the POS and to produce the till receipt on the tablet computer in order to receive, directly on the tablet computer, the signature of the customer who authorizes the payment with a credit card. This embodiment enables the retailer to retain the proof of payment with certainty, a significant requirement since the retailer is not physically present on site.

In an alternative embodiment, it is possible to employ the integrated use of a POS and of a scanner in order to acquire a copy of the signature, with the optional possibility of asking the user to leave the document with the original signature in an adapted container.

After performing the signing and purchase authorization operations, the customer copy of the till receipt or of the invoice can be printed on the POS or on the printing device 423.

If the purchase also requires that a contract be signed, for example in the event of purchase of a smartphone provided with a telephone subscription plan, the customer can view such contract on the device 422 and make his or her signature directly on such device; subsequently the customer can request the printing of such document, which will be done by way of the printing device 423.

In step 6405, if the customer has purchased the product, he or she can withdraw it using the withdrawal code that was received in step 6390: the withdrawal can occur at the premises of a physical operator, or by entry of the withdrawal code in the dispenser 462.

Once the purchase procedure has been finished correctly, or the product has been replaced in the respective drawer, in step 6410 the video call ends and the identification station 430 can serve the needs of a new customer.

Thus it has been shown that the invention achieves the intended aim and objects. In particular, it has been demonstrated how the system and the method thus conceived make it possible to overcome the qualitative limits of the known art in that they make it possible to provide all the typical functions of a quality user assistance service, without the need for the physical presence of a person at the place of reception.

With regard to the first embodiment the invention is in fact capable of remotely accomplishing the functions of reception, from first contact, through orientation within the company, to access control, whereas the second embodiment enables the remotizing of sales, from the provision of information and explanations, through the supervised trialling of the device that the customer wishes to purchase, down to the actual purchase.

In this manner a company is capable of outsourcing such assistance functions, with consequent optimization of staff, reduction of costs, increase of quality of service and guarantee of continuity and complete cover of the service.

The system, thus conceived, is susceptible of numerous modifications and variations, all of which are within the scope of the appended claims. Moreover, all the details may be substituted by other, technically equivalent elements.

For example, with reference to the first embodiment, the photo identification of a visitor can be substituted or supplemented by codified information contained in a recognition code, provided in the form of an alphanumeric code, a bar code or a QR code.

The recognition code can be sent to the visitor by the person who is to be visited, for example via email. In this case, the person to be visited asks the control system 110 to issue a code, which will be automatically associated with an email sent to the visitor. Preferably, the person who has to receive the visit will associate the recognition code issued by the control system 110 with identification data for the visitor, such as name and surname, as well as the date and time chosen for the visit.

The visitor, on receipt of the email, prints it out so as to produce a hardcopy of the recognition code, which, in the reception context explained above, can be used on the scanning device 20. If the visitor is provided with a smartphone or tablet computer, then the recognition code can be displayed on the screen of the smartphone or tablet computer and be applied to the scanning device 20 for the purposes of recognition.

In this manner, the control system 110 is immediately capable of associating the recognition code with the information corresponding to the visitor, further streamlining the reception procedure.

In conclusion, the scope of protection of the claims shall not be limited by the explanations or by the preferred embodiments illustrated in the description by way of examples, but rather the claims shall comprise all the patentable characteristics of novelty that reside in the present invention.

## Claims

1. A system (100, 4100) for remotizing a videoreception service with generation of an authorization to access a controlled-access area (107), which comprises:
- means (35, 37, 73, 435, 437, 473) of audiovisual communication between a registration station (30, 430) of a user (10, 410) and a video assistance station (70, 470) belonging to an operator (71, 471) that is selected automatically - at the time of the service request by said user - from a plurality of operators (71, 471), said plurality of video assistance stations (70, 470) being able to be connected to registration stations (30, 430) belonging to different companies, said means being adapted to enable the acquisition of personal information of said user (10,410) by said selected operator (71, 471);
- a scanning device (20, 420) for acquiring an identification document of said user (10, 410);
- a control system server (110, 4110) comprising or having access to storage means (120), said control system server (110, 4110) being configured to enable said user (10, 410) to use said service following the activation performed by said operator (71, 471);
**characterized in that** said registration station (30) is automatically associated with a video assistance station (70) belonging to a free operator at the time of the request for reception by said user (10); said selected video assistance station (70) being further adapted to be loaded with a user interface generated by said control system server (110, 4110) comprising identification data to be asked to the user (10, 410) and to send said identification data to said control system server (110, 4110) for storage in the storage means (120);
wherein the system further comprises a device for activating a personal identification card (25) for reading a personal identification card; and in which said control system server (4110) is moreover configured to assign said user (10) said personal identification card read by said activation device (25) and authorize the access of said user (10) to said controlled-access area (107).

2. The system of claim 1, **characterized in that** said audiovisual communication means comprise a terminal (35) and a video acquisition device (37) and **in that** said scanning device is adapted to read one or more of an identity document (10), an alphanumeric code, a bar code or a QR code.

3. The system of claim 1, **characterized in that** it comprises a pigeonhole (27) for personal identification cards which are compatible with said activation device (25).

4. The system of claim 3, **characterized in that** said controlled-access area comprises a personal identification card reader (60) which is connected to a barrier (50) for controlling access to said area (107).

5. The system of any one of the preceding claims wherein the video assistance station (70, 470) is an offshore station at a conventional call center or a video call center.

## Patentansprüche

1. System (100, 4100) zur Fernsteuerung eines Videoempfangsdienstes mit einer Erzeugung einer Autorisierung zum Zugreifen auf einen Bereich mit kontrolliertem Zugriff (107), welches umfasst:
- Mittel (35, 37, 73, 435, 437, 473) zur audiovisuellen Kommunikation zwischen einer Registrierungsstation (30, 430) eines Benutzers (10, 410) und einer Videoassistenzstation (70, 470), welche einem Betreiber (71, 471) gehört, der - zu dem Zeitpunkt der Dienstanforderung durch den Benutzer - automatisch aus einer Mehrzahl von Betreibern (71, 471) ausgewählt wird, wobei die Mehrzahl von Videoassistenzstationen (70, 470) mit Registrierungsstationen (30, 430) verbunden werden kann, welche verschiedenen Unternehmen gehören, wobei die Mittel dazu eingerichtet sind, die Erfassung persönlicher Informationen des Benutzers (10, 410) durch den ausgewählten Betreiber (71, 471) zu ermöglichen;
- eine Scanvorrichtung (20, 420) zum Erfassen eines Identifikationsdokuments des Benutzers (10, 410);
- einen Steuersystemserver (110, 4110), welcher Speichermittel (120) umfasst oder Zugriff darauf hat, wobei der Steuersystemserver (110, 4110) derart konfiguriert ist, dass er dem Benutzer (10, 410) ermöglicht, den Dienst nach der durch den Betreiber (71, 471) durchgeführten Aktivierung zu nutzen;
**dadurch gekennzeichnet, dass** die Registrierungsstation (30) zu dem Zeitpunkt der Anforderung von Empfang durch den Benutzer (10) automatisch einer Videoassistenzstation (70) zugeordnet wird, welche einem freien Betreiber gehört; wobei die ausgewählte Videoassistenzstation (70) ferner dazu eingerichtet ist, mit einer durch den Steuersystemserver (110, 4110) erzeugten Benutzerschnittstelle geladen zu werden, welche Identifikationsdaten umfasst, die von dem Benutzer (10, 410) abzufragen sind, und die Identifikationsdaten zur Speicherung in den Speichermitteln (120) dem Steuersystemserver (110, 4110) zu senden;
wobei das System ferner eine Vorrichtung zur Aktivierung einer persönlichen Identifikationskarte (25) zum Lesen einer persönlichen Identifikationskarte umfasst; und wobei der Steuersystemserver (4110) darüber hinaus derart konfiguriert ist, dass er dem Benutzer (10) die von der Aktivierungsvorrichtung (25) gelesene persönliche Identifikationskarte zuweist und den Zugriff des Benutzers (10) auf den Bereich mit kontrolliertem Zugriff (107) autorisiert.

2. System nach Anspruch 1, **dadurch gekennzeichnet, dass** die audiovisuellen Kommunikationsmittel ein Endgerät (35) und eine Videoerfassungsvorrichtung (37) umfassen und dass die Scanvorrichtung dazu eingerichtet ist, eines oder mehrere aus einem Identitätsdokument (10), einem alphanumerischen Code, einem Barcode oder einem QR-Code zu lesen.

3. System nach Anspruch 1, **dadurch gekennzeichnet, dass** es ein Fach (27) für persönliche Identifikationskarten umfasst, welche mit der Aktivierungsvorrichtung (25) kompatibel sind.

4. System nach Anspruch 3, **dadurch gekennzeichnet, dass** der Bereich mit kontrolliertem Zugriff ein Lesegerät (60) für persönliche Identifikationskarten umfasst, welches mit einer Barriere (50) zum Kontrollieren des Zugriffs auf den Bereich (107) verbunden ist.

5. System nach einem der vorhergehenden Ansprüche, wobei die Videoassistenzstation (70, 470) eine Offshore-Station in einem herkömmlichen Callcenter oder einem Video-Callcenter ist.

## Revendications

1. Système (100, 4100) de mise à distance d'un service de vidéoréception avec génération d'une autorisation pour accéder à une zone à accès contrôlé (107), qui comprend :
- un moyen (35, 37, 73, 435, 437, 473) de communication audiovisuelle entre un poste d'enregistrement (30, 430) d'un utilisateur (10, 410) et un poste de vidéo assistance (70, 470) appartenant à un opérateur (71, 471) qui est automatiquement sélectionné - au moment de la requête de service par ledit utilisateur - à partir d'une pluralité d'opérateurs (71, 471), ladite pluralité de postes de vidéo assistance (70, 470) étant capables d'être connectés aux postes d'enregistrement (30, 430) appartenant à différentes sociétés, ledit moyen étant adapté pour permettre l'acquisition d'informations personnelles dudit utilisateur (10, 410) par ledit opérateur sélectionné (71, 471) ;
- un dispositif de balayage (20, 420) destiné à acquérir un document d'identification dudit utilisateur (10, 410) ;
- un serveur de système de commande (110, 4110) comprenant ou ayant un accès au moyen de stockage (120), ledit serveur de système de commande (110, 4110) étant configuré pour permettre audit utilisateur (10, 410) d'utiliser ledit service suite à l'activation effectuée par ledit opérateur (71, 471) ;
**caractérisé en ce que** ledit poste d'enregistrement (30) est automatiquement associé à un poste de vidéo assistance (70) appartenant à un opérateur libre au moment de la requête de réception par ledit utilisateur (10) ; ledit poste sélectionné de vidéo assistance (70) étant en outre adapté pour être chargé avec une interface utilisateur générée par ledit serveur de système de commande (110, 4110) comprenant les données d'identification à demander à l'utilisateur (10, 410) et pour envoyer lesdites données d'identification audit serveur de système de commande (110, 4110) pour le stockage dans le moyen de stockage (120) ;
le système comprenant en outre un dispositif d'activation d'une carte d'identification individuelle (25) pour lire une carte d'identification individuelle ; et dans lequel ledit serveur de système de commande (4110) est en outre configuré pour attribuer ledit utilisateur (10) à ladite carte d'identification individuelle lue par ledit dispositif d'activation (25) et autoriser l'accès dudit utilisateur (10) à ladite zone à accès contrôlé (107).

2. Système selon la revendication 1, **caractérisé en ce que** ledit moyen de communication audiovisuelle comprend un terminal (35) et un dispositif d'acquisition vidéo (37) et **en ce que** ledit dispositif de balayage est adapté pour lire l'un ou plusieurs d'un document d'identité (10), d'un code alphanumérique, d'un code-barres ou d'un code QR.

3. Système selon la revendication 1, **caractérisé en ce qu'**il comprend un casier (27) pour les cartes d'identification individuelles qui sont compatibles avec ledit dispositif d'activation (25).

4. Système selon la revendication 3, **caractérisé en ce que** ladite zone à accès contrôlé comprend un lecteur de carte d'identification individuelle (60) qui est relié à une barrière (50) de contrôle d'accès à ladite zone (107).

5. Système selon l'une quelconque des revendications précédentes, le poste de vidéo assistance (70, 470) étant un poste offshore au niveau d'un centre d'appel classique ou d'un centre d'appel vidéo.
